## Europäisches Patentamt

## European Patent Office

## Office européen des brevets

(19)

(11) Veröffentlichungsnummer: **0 026 891**
**B1**

(12) **EUROPÄISCHE PATENTSCHRIFT**

(45) Veröffentlichungstag der Patentschrift:
**14.12.83**

(51) Int. Cl.³: **B 23 K 9/12**

(21) Anmeldenummer: **80105864.5**

(22) Anmeldetag: **27.09.80**

(54) **Einrichtung für den Vorschub eines Schweissdrahtes.**

(30) Priorität: **08.10.79 SE 7908296**

(43) Veröffentlichungstag der Anmeldung:
**15.04.81 Patentblatt 81/15**

(45) Bekanntmachung des Hinweises auf die Patenterteilung:
**14.12.83 Patentblatt 83/50**

(84) Benannte Vertragsstaaten:
**AT BE CH DE FR GB IT LI NL SE**

(56) Entgegenhaltungen:
**DE - B - 1 177 266**
**DE - C - 937 906**
**GB - A - 977 443**
**US - A - 2 179 108**

(73) Patentinhaber: **ESAB Aktiebolag,
Box 8004 Herkulesgatan 72, S-402 77 Göteborg (SE)**

(72) Erfinder: **Bodén, Knut Folke Ingemar, Manstigen 9,
S-695 00 Laxa (SE)**
Erfinder: **Johansson, Sven Olof, Porlavägen 14,
S-690 33 Hasselfors (SE)**
Erfinder: **Karlsson, Bengt Olof, Blabärsstigen 11,
S-695 00 Laxa (SE)**
Erfinder: **Mucher, Johann, Radjursstigen 25,
S-695 00 Laxa (SE)**

(74) Vertreter: **Frisch, Kurt, c/o ESAB AB Box 8004,
Herkulesgatan 72 S-402 77 Göteborg (SE)**

Einrichtung für den Vorschub eines Schweissdrahtes

Die Erfindung bezieht sich auf eine Einrichtung für den Vorschub eines Schweissdrahtes, die mit einem Paar achsparallelen, in einer Ebene angebrachten Rollen für den Vorschub des zwischen den Rollen und senkrecht zu den Rollenachsen eingeführten Schweissdrahtes und mit einer Schweissdrahtführung versehen ist, die einen rohrartigen Drahtkanal aufweist und die in der Rollenebene einen den Drahtkanal durchsetzenden Spalt besitzt, in den die Rollen bis zum Drahtkanal einführbar sind, wobei die Schweissdrahtführung mit ihrem Drahtaustrittsende in die Öffnung eines Anschlussgliedes eines Schweissdrahtleiters einführbar ist.

Bei einer in der britischen Patentschrift GB-A-977 443 beschriebenen Einrichtung dieser Gattung dient als Schweissdrahtführung ein Rohrstück, dessen Innendurchmesser an den Schweissdrahtdurchmesser angepasst ist. Mit Rücksicht auf die kleinen Schweissdrahtdurchmesser von etwa 1 mm und noch weniger sind diese Rohrstücke mit Innendurchmessern auszuführen, deren Herstellung einen grossen technologischen Aufwand erfordert. Das Ausgangsmaterial für diese Drahtführungen ist daher teuer und muss zusätzlich noch einer spanabhebenden Formgebung unterworfen werden.

Weiter ist durch die DE-C-937 906 eine Schweissdrahtführung im Bereich des Schweissbrennermundstückes bekannt geworden, die aus zwei beweglichen, gegen Längsbewegung gesicherten Kontaktbacken besteht.

Bei der Fabrikation grosser Serien ist es besonders wünschenswert, die Herstellungskosten jedes einzelnen Details so niedrig als möglich zu halten. Bereits geringfügige Kosteneinsparungen per Einheit bringen bei grossen Stückzahlen wesentliche wirtschaftliche Vorteile.

Zur Lösung der Aufgabe wird die im Anspruch 1 angegebene Einrichtung vorgeschlagen. Weitere vorteilhafte Ausgestaltungen der Erfindung sind in den Unteransprüchen angegeben.

Die Herstellung derartiger Führungsschienen ist einfach und kann von billigem Ausgangsmaterial ausgehen und beispielsweise durch spanlose Formgebung erfolgen, die wesentlich zeitsparender und billiger als die spanabhebende Formgebung ist. So ist es zweckmässig, die Führungsschienen aus vorzugsweise kaltgewalztem Bandstahl herzustellen, der sich für eine spanlose Formgebung besonders eignet.

Die Erfindung wird nun nachfolgend im Zusammenhang mit dem in der Zeichnung dargestellten Ausführungsbeispiel näher erläutert.

Fig. 1 zeigt eine Vorschubeinrichtung für einen Schweissdraht.

Fig. 2 zeigt ein Detail von Fig. 1 im Schnitt längs II–II.

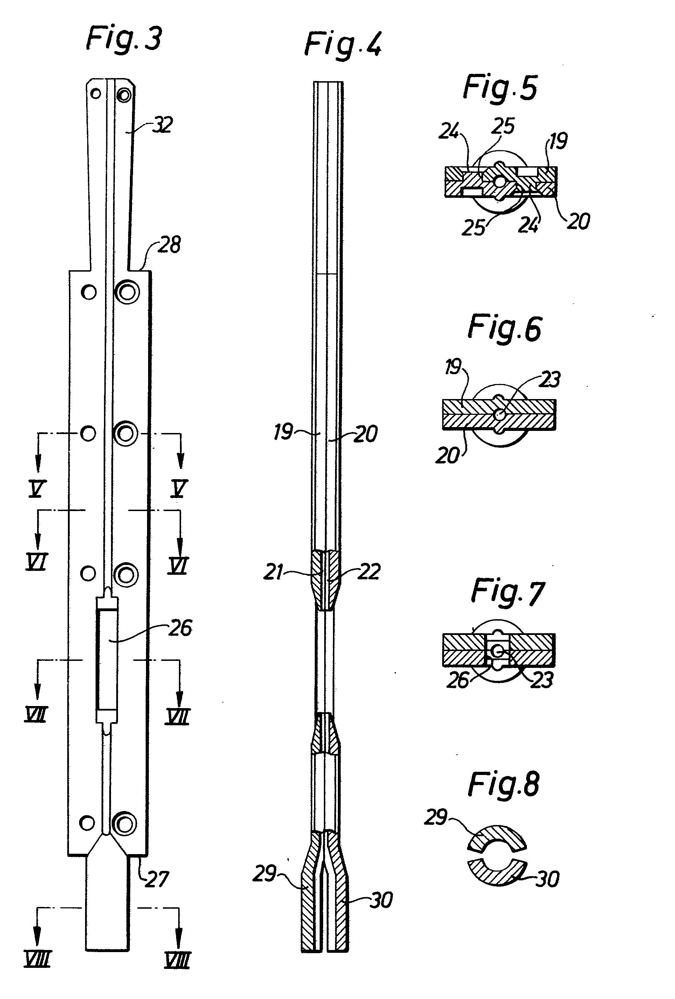

Fig. 3 zeigt in etwas grösserem Massstab eine Drahtführung für den Schweissdraht.

Fig. 4 stellt teilweise im Schnitt eine Seitenansicht der Drahtführung dar.

Fig. 5–8 zeigen verschiedene Schnitte durch die Drahtführung längs V–V, VI–VI, VII–VII und VIII–VIII der Fig. 3.

Eine Vorschubrolleneinheit 1 ist auf einem Stativ 2 montiert. Die Vorschubrolleneinheit 1 besteht aus einer Antriebsrolle 3, die über ein hier nicht gezeigtes Getriebe von einem hinter dem Stativ 2 angebrachten Motor 4 angetrieben wird, und einer Druckrolle 5, deren Achse 6 in einem Bügel 7 gelagert ist. Der Bügel 7 mit der Druckrolle 5 ist in der Rollenebene schwenkbar um einen Zapfen 8, der im Stativ 2 befestigt ist. Ein Federarm 9 ist schwenkbar um einen auf dem Bügel 7 angebrachten Zapfen 10. Am vorderen Ende des Federarms ist eine Schraube 11 befestigt, die in eine Nut 12 eines Flansches 13 des Statives 2 eingeschoben ist. Der Abstand zwischen dem Federarm 9 und dem Flansch 13 ist mit Hilfe von Muttern 14 einstellbar.

Eine Drahtführung 15 für den Schweissdraht ist zwischen einer aus dem Stativ vorspringenden Nase 16 und einer Anschlussdose 17 für ein hier nicht dargestelltes Schweisskabel eingesetzt. Die Anschlussdose ist mit einer zylindrischen Führungshülse 18 versehen, in die das eine Ende der Drahtführung 15 eingeführt ist. Die zylindrische Führungshülse könnte jedoch beispielsweise auch im Kopfende des in der Anschlussdose 17 anschliessbaren Schweisskabels angebracht sein. Die Anschlussdose 17, die im übrigen hier nicht näher beschrieben ist, ist auf bekannte Weise mit Anschlüssen für Schweissstrom, Schutzgas und gegebenenfalls für andere für die Durchführung des Schweissverfahrens erforderlichen Medien versehen. Diese Medien werden in der Anschlussdose ins Schweisskabel übergeführt, das die Vorschubrolleneinheit 1 mit einem Schweissbrenner, beispielsweise einer Schweisspistole, verbindet.

Die Drahtführung 15 besteht aus zwei identischen Führungsschienen 19, 20. In jeder Führungsschiene ist eine Rinne 21, 22 eingepresst, die zusammen einen Drahtkanal 23 für den Schweissdraht bilden. In jeder Führungsschiene sind einige Verbindungsstifte 24 eingepresst und einige Löcher 25 ausgestanzt. Beim Zusammenfügen der beiden Führungsschienen längs ihren Stossflächen werden die Verbindungsstifte 24 der einen in die entsprechenden Löcher der anderen Führungsschiene eingeführt. Die Verbindungsstifte 24 dienen als Nieten, die nach dem Einpressen in die Löcher 25 die beiden Führungsschienen zusammenhalten. In jeder Führungsschiene ist ausserdem ein Schlitz ausgestanzt. Diese bilden nach dem Zusammenfügen einen Spalt 26, in der die beiden Rollen 3, 5 eingeführt sind, um den im Spalt 26 zugänglichen, hier nicht dargestellten Schweissdraht vorzuschieben.

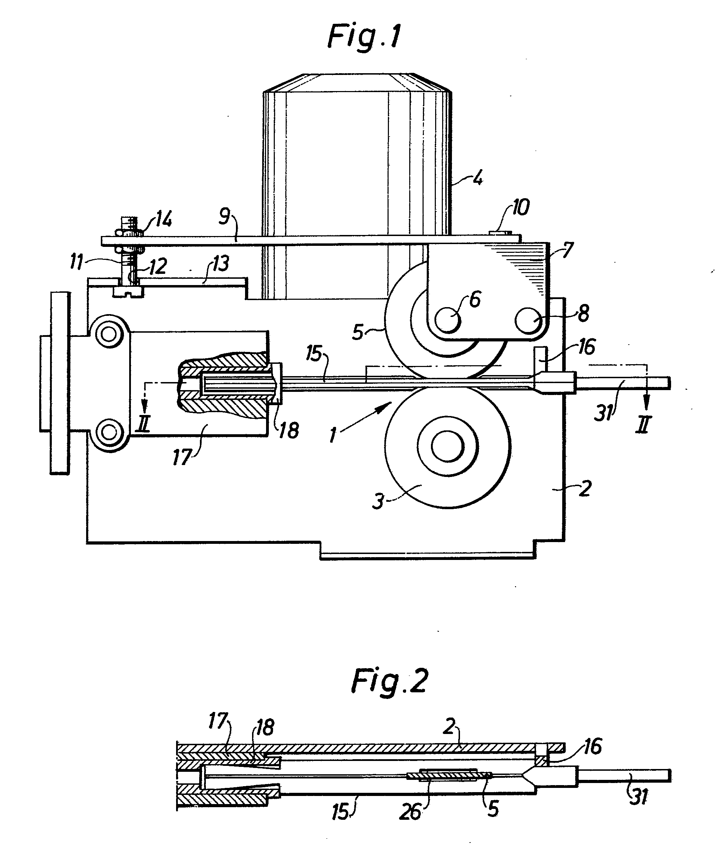

In Fig. 1 und Fig. 2 sind die Verbindungsstifte 24 und Löcher 25 der Übersichtlichkeit halber nicht wiedergegeben.

Die Drahtführung hat zwei Stützkanten 27, 28, die sich gegen die Führungshülse 18 und die Nase 16 abstützen und die Drahtführung in axialer Richtung fixieren. Das vordere Ende der Führungsschiene ist durch Pressen zu Lippen 29, 30 umgeformt, in deren durch das Zusammenfügen gebildete rohrförmige Öffnung ein biegbarer Drahtleiter 31 eingeführt ist, durch den der Schweissdraht (hier nicht dargestellt) von einem Drahtmagazin, beispielsweise einer Spule, der Vorschubeinrichtung zugeführt wird. Das rückwärtige Ende 32 ist schwalbenschwanzförmig gestaltet, wodurch das Einsetzen der Drahtführung 15 in die Führungshülse 18 erleichtert wird.

Wenn die Drahtführung 15 in der Vorschubeinrichtung angebracht werden soll, wird die Schraube 11 des Federarms 9 aus der Nut 12 herausgeschoben und der Bügel 7 mit der Druckrolle 5 nach oben gedreht. Um an der Nase 16 vorbeizukommen, muss die Drahtführung mit ihrem rückwärtigen Ende 32 etwas schräg in die Führungshülse 18 eingeführt werden, bis sie mit der Stützkante 28 an der Führungshülse 18 anliegt. Das schräge Einführen wird durch das schwalbenschwanzförmige Ende 32 ermöglicht. Danach wird die Drahtführung 15 mit dem Spalt 26 über die Rolle 3 gebracht und gleichzeitig mit der Führungshülse 18 ausgerichtet, so dass die Stützkante 27 an der Nase 16 anliegt und die Drahtführung in axialer Richtung gegen Verschiebung gesichert ist.

Der Schweissdraht (hier nicht dargestellt) wird durch den Drahtleiter 31 zugeführt, und durch den Spalt 26 manuell vorgeschoben. Nun wird die Druckrolle 5 in den Spalt 26 eingeführt und der Federarm 9 in der Nut 12 eingespannt, wodurch die Druckrolle 5 gegen den Draht und die Rolle 3 gepresst wird. Der Anpressdruck kann mit Hilfe der Muttern 14 durch Änderung des Abstandes zwischen Federarm 9 und Flansch 13 eingestellt werden. Die Vorschubeinrichtung ist damit für den Drahtvorschub betriebsbereit.

Die Einrichtung ermöglicht einen sehr raschen Austausch der Drahtführungen, beispielsweise beim Übergang auf einen anderen Drahtdurchmesser oder wegen Verschleisses nach längerer Betriebszeit.

**Patentansprüche**

1. Einrichtung für den Vorschub eines Schweissdrahtes, die mit einem Paar achsparallelen, in einer Ebene angebrachten Rollen (3, 5) für den Vorschub des zwischen den Rollen und senkrecht zu den Rollenachsen eingeführten Schweissdrahtes und mit einer Schweissdrahtführung (15) versehen ist, die einen rohrartigen Drahtkanal (23) aufweist und die in der Rollenebene einen den Drahtkanal durchsetzenden Spalt (26) besitzt, in den die Rollen bis zum Drahtkanal (23) einführbar sind, wobei die Schweissdrahtführung (15) mit ihrem Drahtaustrittsende in die Öffnung eines Anschlussgliedes (17, 18) eines Schweissdrahtleiters einführbar ist, dadurch gekennzeichnet, dass die Schweissdrahtführung (15), die in die Öffnung des Anschlussgliedes (17, 18) einschiebbar und in der Öffnung seitlich geführt ist und aus zwei bandförmigen längs einer Stossfläche zusammengefügten Führungsschienen (19, 20) besteht, von denen zumindest eine in der Stossfläche eine Rinne (21, 22) aufweist und die auf einem Teil ihrer Länge im Bereich der Rinne von dem Spalt (26) durchsetzt sind, durch den Spalt (26) bezüglich der Rollen (3, 5) und der Vorschubrichtung in eine Eintrittsführung und eine Austrittsführung unterteilt ist und im Bereich der Eintrittsführung und Austrittsführung mit je einem Querabsatz (27, 28) versehen ist, wobei der Querabsatz (27) der Eintrittsführung mit einem Anschlag (16) eines Statives (2) für die Rollen (3, 5) und der Querabsatz (28) der Austrittsführung mit einem Anschlag (18) des Anschlussgliedes (17, 18) zusammenwirkt und der Abstand zwischen den beiden Querabsätzen (27, 28) gleich gross ist wie der Abstand zwischen den beiden Anschlägen (16, 18).

2. Einrichtung nach Patentanspruch 1, dadurch gekennzeichnet, dass eine der Rollen (3) unterhalb der Schweissdrahtführung (15) angebracht ist und die Länge des Schlitzes (26) kleiner ist als der Durchmesser der genannten Rolle (3).

3. Einrichtung nach Patentanspruch 1 oder 2, dadurch gekennzeichnet, dass der Teil (32) der Austrittsführung zwischen ihrem Querabsatz (28) und dem Austrittsende schwalbenschwanzförmig ausgeführt ist.

4. Einrichtung nach einen der Patentansprüche 1 bis 3, dadurch gekennzeichnet, dass das Anschlussglied (17, 18) und die Antriebsrolle (3) auf dem Stativ (2) montiert sind und die Druckrolle (5) von einem Halter (Bügel 7) getragen wird, der um einen mit den Rollenachsen parallelen Zapfen (8) des Statives schwenkbar ist, wobei zwischen dem Halter (Bügel 7) und dem Stativ ein Federarm (9) für das Anpressen der Druckrolle (5) an die Antriebsrolle (3) und an den zwischen den Rollen vorgeschobenen Draht vorgesehen ist, und die Schweissdrahtführung aus der Öffnung des Anschlussgliedes (17, 18) herausziehbar ist, wenn die Druckrolle (5) mit dem Halter (7) aus der Anpressposition ausgeschwenkt ist.

**Claims**

1. Welding-wire feed device, which is provided with a pair of axially parallel rollers (3, 5), installed in one plane, for feeding the welding-wire forward, the wire being inserted between the rollers and at right-angles to their axes, and which is provided with a welding-wire guide (15), this guide possessing a tube-like wire passage (23) and a gap (26) which, in the plane of the rollers, passes through the wire passage, it being possible to introduce the rollers into this gap, as far as the wire passage (23), and to introduce the wire-exit end of the welding-wire guide (15) into the opening of a connecting element (17, 18) of a welding-wire conductor, characterised in that the welding-wire guide (15) can be pushed into the opening of the connecting element (17, 18), is laterally guided in the opening, and is composed of two strip-shaped guide rails (19, 20), which are joined along a butting surface, at least one of these rails possessing a channel (21, 22) in the butting surface, the gap (26) passing through them over a portion of their length in the region of the channel, and is divided, by the gap (26), with reference to the rollers (3, 5) and to the feed direction, into an entry-guide and an exit guide, and is provided, in the region of the entry-guide and in the region of the exit guide, with, in each case, a transverse shoulder (27, 28), the transverse shoulder (27) of the entry-guide interacting with a stop (16) of a support (2) for the rollers (3, 5) and the transverse shoulder (28) of the exit guide interacting with a stop (18) of the connecting element (17, 18), and the distance between the two transverse shoulders (27, 28) being equal to that between the two stops (16, 18).

2. Device according to Patent Claim 1, characterised in that one of the rollers (3) is fitted beneath the welding-wire guide (15), and the length of the slot (26) is smaller than the diameter of the above-mentioned roller (3).

3. Device according to Patent Claim 1 or 2, characterised in that the portion (32) of the exit guide between its transverse shoulder (28) and the exit end is designed in the shape of a swallowtail.

4. Device according to one of Patent Claims 1 to 3, characterised in that the connecting element (17, 18) and the drive roller (3) are installed on the support (2), and the pressure roller (5) is carried by a retaining yoke (7) which can pivot about a pin (8) belonging to the support, this pin being parallel with the axes of the rollers, a spring arm (9) being provided, between the retaining yoke (7) and the support, for pressing the pressure roller (5) towards the drive roller (3) and against the wire, which is being fed forwards, between the rollers, and it being possible to pull the welding-wire guide out of the opening of the connecting element (17, 18) when the pressure roller (5), with the holder (7), is pivoted out of the position in which it exerts pressure.

**Revendications**

1. Dispositif d'avance d'un fil à souder qui est muni d'une paire de rouleaux (3, 5) à axes parallèles et disposés dans un plan pour l'avance du fil à souder introduit entre les rouleaux perpendiculairement aux axes des rouleaux et d'un dispositif de guidage (15) du fil à souder qui comprend un canal à fil (23) en forme de tube et qui présente dans le plan des rouleaux un interstice (26) traversant le canal destiné au fil, dans lequel les rouleaux peuvent pénétrer jusqu'au canal (23) destiné au fil, le dispositif de guidage (15) de fil à souder étant inséré par son extrémité de sortie du fil dans l'ouverture d'un organe de raccordement (17, 18) d'un conducteur ou guide-fil à souder, caractérisé en ce que le dispositif de guidage (15) de fil à souder, qui peut être inséré dans l'ouverture de l'organe de raccordement (17, 18) et est guidé latéralement dans l'ouverture et qui est constitué par deux rails de guidage (19, 20) en forme de bandes et rassemblés le long d'une surface de jonction, dont l'un au moins comprend une gorge (21, 22) dans la surface de jonction et qui sont traversés sur une partie de leur longueur dans la zone de la gorge par l'interstice (26), subdivisé par l'interstice (26) par rapport aux rouleaux (3, 5) du dispositif d'avance en une partie de guidage d'entrée et une partie de guidage de sortie, et est muni dans la zone de la partie de guidage d'entrée et de la partie de guidage de sortie de butées transversales respectives (27, 28), la butée transversale (27) de la partie de guidage d'entrée coopérant avec une butée (16) d'un socle (2) destiné aux rouleaux (3, 5) et la butée transversale (28) de la partie de guidage de sortie coopérant avec une butée (18) de l'organe de raccordement (17, 18) et la distance entre les deux butées transversales (27, 28) étant de même importance que la distance entre les deux butées (16, 18).

2. Dispositif selon la revendication 1, caractérisé en ce que l'un des rouleaux (3) est monté au-dessous du dispositif de guidage (15) de fil à souder et en ce que la longueur de la fente (26) est plus faible que le diamétre dudit rouleau (3).

3. Dispositif selon la revendication 1 ou 2, caractérisé en ce que la portion (32) de la partie de guidage de sortie a la forme d'une queue d'aronde entre sa butée transversale (28) et l'extrémité de sortie.

4. Dispositif selon l'une des revendications 1 à 3, caractérisé en ce que l'organe de raccordement (17, 18) et le rouleau d'entraînement (3) sont montés sur le socle (2) et le rouleau de pression (5) est supporté par un support (étrier 7) qui peut pivoter autour d'un tourillon (8) du socle qui est parallèle aux axes des rouleaux, un bras élastique (9) étant prévu pour presser le rouleau de pression (5) contre le rouleau d'entraînement (3) et contre le fil qui avance entre les rouleaux entre le support (étrier 7) et le socle, et le dispositif de guidage de fil à souder pouvant être retiré de l'ouverture de l'organe de raccordement (17, 18) lorsque le rouleau de pression (5) est pivoté avec le support (7) hors de la position de pression.

## Fig.1

## Fig.2

# Fig.3

# Fig.4

# Fig.5

# Fig.6

# Fig.7

# Fig.8